# EUROPÄISCHE PATENTSCHRIFT

(11) **EP 0 855 017 B1**
(45) Veröffentlichungstag und Bekanntmachung des Hinweises auf die Patenterteilung: **21.12.2011**
(21) Anmeldenummer: 97938890.7
(22) Anmeldetag: 08.08.1997
(51) Int. Cl.: G01F 1/84

(54) **MASSENDURCHFLUSSMESSGERÄT**
MASS FLOW RATE MEASURING INSTRUMENT
APPAREIL DE MESURE DU DEBIT MASSIQUE

(30) Priorität: 12.08.1996 DE 19632500
(43) Veröffentlichungstag der Anmeldung: 29.07.1998
(73) Patentinhaber: Krohne AG, 4019 Basel (CH)
(72) Erfinder: HUSSAIN, Yousif A., Coulsdon, Surrey CR5 2SE (GB)
(74) Vertreter: Gesthuysen, Hans Dieter
(86) Internationale Anmeldenummer: PCT/EP1997/004324
(87) Internationale Veröffentlichungsnummer: WO 1998/007008

(56) Entgegenhaltungen:
- EP-A- 0 578 113
- EP-A- 0 598 287
- EP-A- 0 687 893
- EP-A- 0 759 542
- WO-A-95/03528

## Beschreibung

Die Erfindung betrifft ein Massendurchflußmeßgerät für strömende Medien, das nach dem Coriolis-Prinzip arbeitet, mit einer das strömende Medium führenden, zumindest im wesentlichen geraden Coriolis-Leitung, mit mindestens einem auf die Coriolis-Leitung einwirkenden Schwingungserzeuger, mit mindestens einem Coriolis-Kräfte und/oder auf Coriolis-Kräften beruhende Coriolis-Schwingungen erfassenden Meßwertaufnehmer, mit einem ersten Kompensationszylinder und mit einem zweiten Kompensationszylinder, wobei die Coriolis-Leitung zumindest teilweise innerhalb des ersten Kompensationszylinders angeordnet und mit dem ersten Kompensationszylinder mechanisch verbunden ist, die Schwingungseigenschaften des ersten Kompensationszylinders im wesentlichen denen der Coriolis-Leitung entsprechen, die Coriolis-Leitung und der erste Kompensationszylinder innerhalb des zweiten Kompensationszylinders angeordnet sind und die Coriolis-Leitung mit dem zweiten Kompensationszylinder mechanisch verbunden ist

Ein Massendurchflußmeßgerät für strömende Medien der zuvor beschriebenen Art ist beispielsweise aus der DE - A - 41 24 295 bekannt. Bei diesem bekannten Massendurchflußmeßgerät ist problematisch, daß sein Massenschwerpunkt im Gegensatz zu den ebenfalls bekannten Massendurchflußmeßgeräten mit zwei parallel verlaufenden Coriolis-Leitungen, die nach Art einer Stimmgabel arbeiten (vgl. z. B. die US - 4,127,028), hin und her schwingt, so daß die Möglichkeit für eine Einkopplung von Störschwingungen größer ist, worunter wiederum die Meßgenauigkeit leidet.

Aus der EP 0 598 287 A1 ist ein Ausgleichs-Massendurchflußmeßgerät bekannt, das eine im wesentlichen gerade Coriolis-Leitung und einen die Coriolis-Leitung umgebenden Kompensationszylinder aufweist. Die EP 0 598 287 A1 geht von der Erkenntnis aus, daß das als Kompensationszylinder vorgesehene Ausgleichselement die gleichen Schwingungseigenschaften aufweisen muß, wie die Coriolis-Leitung. Die Aufgabe der Frequenzeinstellbarkeit des als Kompensationszylinder ausgebildeten Ausgleichselements wird durch ein an dem Kompensationszylinder angebrachtes Ausgleichselement in Form einer Schraubenmutter realisiert, deren Gewicht verändert werden kann. Zur Beeinflussung der Eigenfrequenz des Kompensationszylinders ist gemäß einem weiteren Ausführungsbeispiel eine Frequenz-Regelungseinheit vorgesehen, die dazu dient, den Kompensationszylinder so zu beeinflussen, daß er bei einer Frequenz schwingt, die der Eigenfrequenz der Coriolis-Leitung entspricht.

Die WO 95/03528 offenbart ein Coriolis-Massendurchflußmeßgerät, mit einem geraden Meßrohr und einem an dem Meßrohr befestigten Blindrohr. Das Blindrohr ist entweder parallel oder koaxial zu dem Meßrohr angeordnet und wird nicht von einem Meßfluid durchströmt. An dem Blindrohr ist mittig eine elektromagnetische Treiberanordnung befestigt, die das Blindrohr im Betriebszustand zu Resonanzschwingungen anregt, wobei die Resonanzschwingungen von Knotenplatten auf das Meßrohr übertragen werden. Das Meßrohr wird dadurch ebenfalls zu Resonanzschwingungen angeregt, wobei vorzugsweise die Resonanzfrequenz des Blindrohrs in Abhängigkeit der Phasenlage seiner Schwingung zu der Schwingung des Meßrohrs auf etwa 180° geregelt wird. Die Phasendifferenz der Schwingungen des einlaßseitigen Teils des Meßrohrs gegenüber den Schwingungen des aulaßseitigen Teils des Meßrohrs wird mittels Sensoren erfasst und mit einer Auswerteelektronik ausgewertet.

Bei den bekannten Massendurchflußmeßgeräten, bei denen zwei parallel verlaufende Coriolis-Leitungen nach Art einer Stimmgabel betrieben werden, ist wiederum problematisch, daß sie aufgrund eines komplizierten Leitungsverlaufes einen erhöhten Strömungswiderstand aufweisen und gleichzeitig nur unter erhöhtem Aufwand zu reinigen sind. Gerade das letztere Problem gilt auch für Massendurchflußmeßgeräte mit parallel verlaufenden geraden Coriolis-Leitungen (vgl. z. B. die DE - C - 34 43 234).

Der Erfindung liegt somit die Aufgabe zugrunde, die Meßgenauigkeit des bekannten Massendurchflußmeßgerätes für strömende Medien, das nach dem Coriolis-Prinzip arbeitet, bei Beibehaltung seiner grundsätzlichen Vorteile zu verbessern.

Die zuvor aufgezeigte und hergeleitete Aufgabe ist erfindungsgemäß dadurch gelöst, daß zwischen dem zweiten Kompensationszylinder und dem ersten Kompensationszylinder an den Enden des ersten Kompensationszylinders mindestens zwei Stellglieder zur Eliminierung von Phasenverschiebungen bei der Schwingung des ersten Kompensationszylinders angeordnet sind.

Durch die erfindungsgemäße Ausgestaltung des Massendurchflußmeßgerätes für strömende Medien ist gewährleistet, daß die Coriolis-Leitung und der Kompensationszylinder zumindest im wesentlichen in der Art einer Stimmgabel gegeneinander schwingen. Hierdurch wird die Schwingung des Massenschwerpunktes des Massendurchflußmeßgerätes auf ein geringes Maß reduziert, wenn nicht gar eliminiert, wodurch die Möglichkeit der Einkopplung von Störschwingungen reduziert und somit die Meßgenauigkeit erhöht ist.

Das erfindungsgemäße Massendurchflußmeßgerät ist dadurch vorteilhaft, daß die Coriolis-Leitung und der Kompensationszylinder innerhalb eines mit der Coriolis-Leitung mechanisch verbundenen zweiten Kompensationszylinders angeordnet sind. Hinsichtlich der Ausgestaltung dieses zweiten Kompensationszylinders wird beispielhaft auf die Offenbarung der DE - A - 41 24 295 verwiesen. Beispielsweise kann die Coriolis-Leitung innerhalb des zweiten Kompensationszylinders unter Zug-Vorspannung angeordnet sein.

Die Phasenverschiebungen bei der Schwingung des ersten Kompensationszylinders können dadurch reduziert werden, daß zwischen dem zweiten Kompensationszylinder und dem ersten Kompensationszylinder mindestens zwei Stellglieder zur Eliminierung eben dieser Phasenverschiebungen angeordnet sind.

Die Anpassung der Schwingungseigenschaften, insbesondere der Masse, der Federkonstante und der Dämpfungskonstante, des Kompensationszylinders an die der Coriolis-Leitung ist wesentlich erleichtert, wenn der Kompensationszylinder und die Coriolis-Leitung aus dem gleichen Material bestehen. Als Material für die Coriolis-Leitung findet regelmäßig Titan Verwendung, so daß sich Titan auch als Material für den Kompensationszylinder empfiehlt.

Ist, gemäß einer Ausgestaltung der Erfindung, der Schwingungserzeuger zwischen dem Kompensationszylinder und der Coriolis-Leitung angeordnet, so gewährleistet dies, daß der Kompensationszylinder und die Coriolis-Leitung jedenfalls in der Art einer Stimmgabel gegeneinander schwingen.

Bei entsprechender Abstimmung der Schwingungseigenschaften des Kompensationszylinders und der Coriolis-Leitung ist das Gegeneinanderschwingen nach Art einer Stimmgabel auch gewährleistet, wenn der Schwingungserzeuger zwischen dem zweiten Kompensationszylinder und dem Kompensationszylinder angeordnet ist.

Sind gemäß einer weiteren vorteilhaften Ausgestaltung die Meßwertaufnehmer zwischen dem Kompensationszylinder und der Coriolis-Leitung angeordnet, so ist eine besonders einfache Herstellung des Massendurchflußmeßgerätes gewährleistet.

Alternativ zu der zuletzt beschriebenen Ausgestaltung kann es vorteilhaft sein, die Meßwertaufnehmer zwischen dem zweiten Kompensationszylinder und der Coriolis-Leitung anzuordnen, da hierdurch der Einfluß von Phasenverschiebungen bei der Schwingung des ersten Kompensationszylinders vermindert wird. Diese Phasenverschiebungen entstehen dadurch, daß der erste Kompensationszylinder im Gegensatz zur Coriolis-Leitung nicht von dem strömenden Medium durchflossen wird.

Da die Schwingungseigenschaften des ersten Kompensationszylinders aufgrund der in der Regel nicht gleich bleibenden Dichte des strömenden Mediums in der Regel nicht exakt denen der Coriolis-Leitungen entsprechen, ist es vorteilhaft, zwischen dem zweiten Kompensationszylinder und dem ersten Kompensationszylinder ein Stellglied zur Eliminierung des mediumsdichteabhängigen Massenunterschieds zwischen dem erstem Kompensationszylinder und der Coriolis-Leitung anzuordnen.

Im einzelnen gibt es nun eine Vielzahl von Möglichkeiten, das erfindungsgemäße Massendurchflußmeßgerät für strömende Medien, das nach dem Coriolis-Prinzip arbeitet, auszugestalten und weiterzubilden. Dazu wird verwiesen einerseits auf die dem Patentanspruch 1 nachgeordneten Patentansprüche, andererseits auf die Beschreibung von bevorzugten Ausführungsbeispielen in Verbindung mit der Zeichnung. In der Zeichnung zeigt
- Fig. 1: - nicht Teil der Erfindung - eine schematische Darstellung eines Massendurchflußmeßgerätes,
- Fig. 2: eine schematische Darstellung eines ersten Ausführungsbeispiels des erfindungsgemäßen Massendurchflußmeßgerätes,
- Fig. 3: - nicht Teil der Erfindung - eine schematische Darstellung eines weiteren Massendurchflußmeßgerätes,
- Fig. 4: - nicht Teil der Erfindung - eine schematische Darstellung eines weiteren Massendurchflußmeßgerätes und
- Fig. 5: eine schematische Darstellung eines Zweiten Ausführungsbeispiels des erfindungsgemäßen Massendurchflußmeßgerätes.

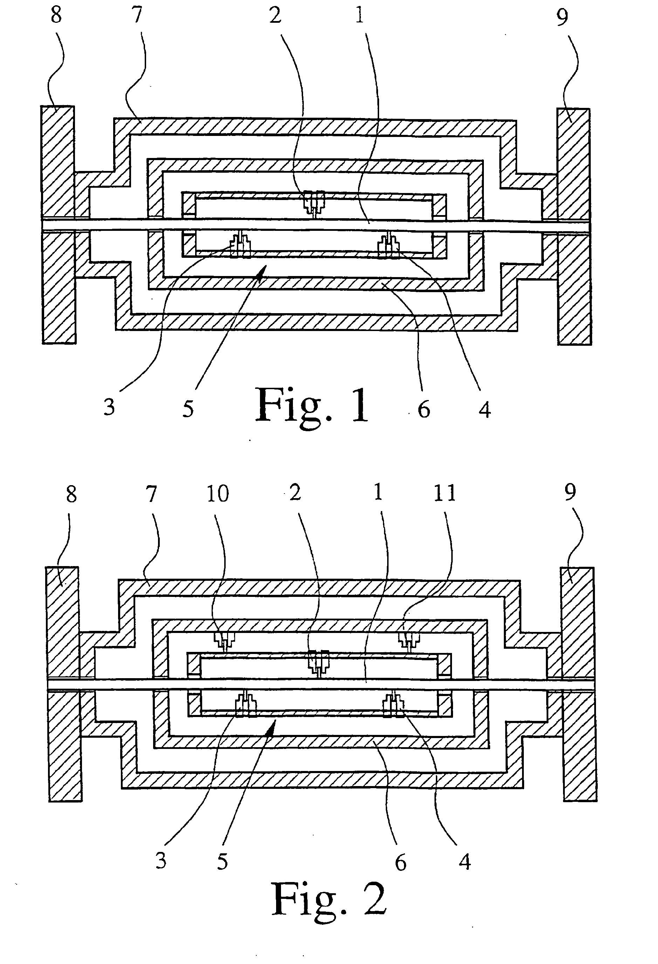

Fig. 1 der Zeichnung zeigt ein Massendurchflußmeßgerät für strömende Medien - nicht Teil der Erfindung, das nach dem Coriolis-Prinzip arbeitet, mit einer das strömende Medium führenden, zumindest im wesentlichen geraden Coriolis-Leitung 1, mit einem auf die Coriolis-Leitung 1 einwirkenden Schwingungserzeuger 2, mit zwei auf Coriolis-Kräften beruhende Coriolis-Schwingungen erfassende Meßwertaufnehmer 3, 4 und mit einem nicht von dem Medium durchströmten Kompensationszylinder 5. Dabei ist die Coriolis-Leitung 1 innerhalb des Kompensationszylinders 5 angeordnet und mit diesem mechanisch verbunden. Erfindungsgemäß ist das in Fig. 1 dargestellte Massendurchflußmeßgerät derart ausgestaltet, daß die Schwingungseigenschaften des Kompensationszylinders 5 im wesentlichen denen der Coriolis-Leitung 1 entsprechen.

Bei dem in Fig. 1 dargestellten Massendurchflußmeßgerät sind die Coriolis-Leitung 1 und der Kompensationszylinder 5 innerhalb eines mit der Coriolis-Leitung 1 in einer axiale Relativbewegungen ausschließenden Weise mechanisch verbundenen zweiten Kompensationszylinder 6 angeordnet. Diese Anordnung erfolgt beispielsweise derart, daß die Coriolis-Rohrleitung 1 mit Zug-Vorspannung innerhalb des zweiten Kompensationszylinders 6 angeordnet ist. Weiter ist in Fig. 1 ein äußeres Gehäuse 7 dargestellt, welches als mechanischer Schutz dient und außerdem Befestigungsflansche 8, 9 trägt.

Bei dem in Fig. 1 dargestellten Massendurchflußmeßgerät ist der Schwingungserzeuger 2 zwischen dem ersten Kompensationszylinder 5 und der Coriolis-Leitung 1 angeordnet. In diesem Ausführungsbeispiel sind auch die Meßwertaufnehmer 3, 4 zwischen dem ersten Kompensationszylinder 5 und der Coriolis-Leitung 1 angeordnet.

Das erste Ausführungsbeispiel der Erfindung entspricht in seinem Aufbau zunächst grundsätzlich dem Zuvor beschriebenen Massendurchflußmeßgerät. Alle identischen Bauteile sind mit denselben Bezugszeichen versehen. Zusätzlich sind bei dem in Fig. 2 dargestellten zweiten Ausführungsbeispiel zwischen dem zweiten Kompensationszylinder 6 und dem ersten Kompensationszylinder 5 an den Enden des ersten Kompensationszylinders 5 zwei Stellglieder 10, 11 zur Eliminierung von Phasenverschiebungen angeordnet.

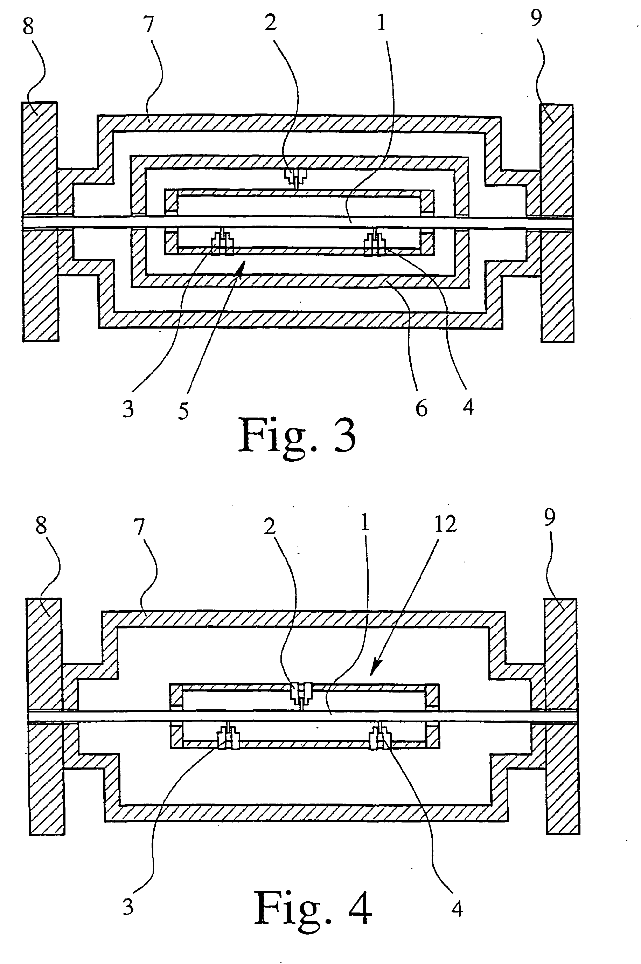

Das in Fig. 3 dargestellte Massendurchflußmeßgerät - nicht Teil der Erfindung - unterscheidet sich von dem in Fig. 2 dargestellten zweiten Ausführungsbeispiel dadurch, daß der Schwingungserzeuger 2 zwischen dem zweiten Kompensationszylinder 6 und dem ersten Kompensationszylinder 5 angeordnet ist. Da der erste Kompensationszylinder 5 und die Coriolis-Leitung 1 mechanisch miteinander verbunden sind, übertragen sich die Schwingungen des ersten Kompensationszylinders 5 somit auch, wie für die Messung notwendig, auf die Coriolis-Leitung 1.

Die Fig. 4 zeigt ein Massendurchflußmeßgerät - nicht Teil der Erfindung - , bei welchem ein einziger Kompensationszylinder 12 gleichzeitig die Funktion des ersten Kompensationszylinders und des zweiten Kompensationszylinders übernimmt. Dies bedeutet, daß dieser einzige Kompenssationszylinder 12 einerseits in seinen Schwingungseigenschaften im wesentlichen denen der Coriolis-Leitung 1 entspricht und daß gleichzeitig die Coriolis-Leitung 1 unter Zug-Vorspannung in dem einzigen Kompensationszylinder 12 angeordnet ist.

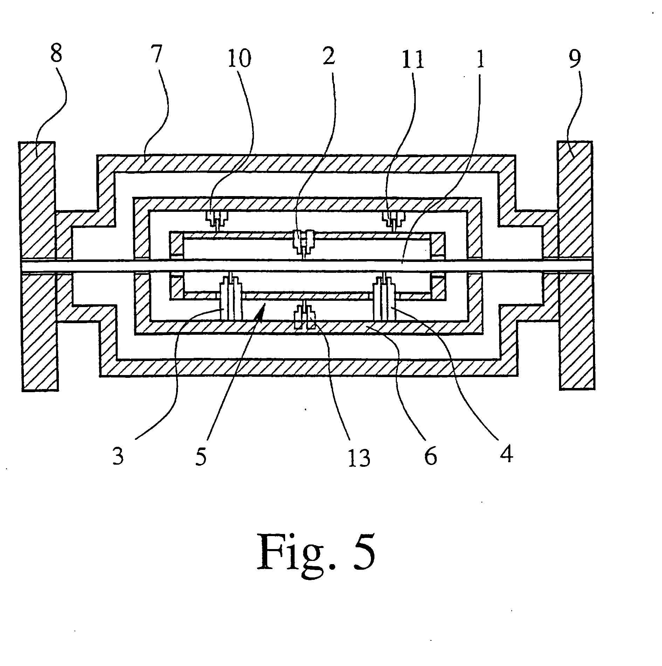

Schließlich zeigt Fig. 5 ein zweites Ausführungsbeispiel des erfindungsgemäßen Massendurchflußmeßgerätes, bei dem der Schwingungserzeuger 2 zwischen dem ersten Kompensationszylinder 5 und der Coriolis-Leitung 1 angeordnet ist, die Meßwertaufnehmer 3, 4 zwischen dem zweiten Kompensationszylinder 6 und der Coriolis-Leitung 1 angeordnet sind, zwischen dem zweiten Kompensationszylinder 6 und dem ersten Kompensationszylinder 5 zwei Stellglieder 10, 11 zur Eliminierung von Phasenverschiebungen bei der Schwingung des ersten Kompensationszylinders 5 angeordnet sind und schließlich zwischen dem zweiten Kompensationszylinder 6 und dem ersten Kompensationszylinder 5 ein weiteres Stellglied 13 zur Eliminierung des mediumsdichteabhängigcn Massenunterschieds zwischen dem ersten Kompensationszylinder 5 und der Coriolis-Leitung 1 angeordnet ist.

## Patentansprüche

1. Massendurchflußmeßgerät für strömende Medien, das nach dem Coriolis-Prinzip arbeitet, mit einer das strömende Medium führenden, zumindest im wesentlichen geraden Coriolis-Leitung (1), mit mindestens einem auf die Coriolis-Leitung (1) einwirkenden Schwingungserzeuger (2), mit mindestens einem Coriolis-Kräfte und/oder auf Coriolis-Kräften beruhende Coriolis-Schwingungen erfassenden Meßwertaufnehmer (3, 4), mit einem ersten Kompensationszylinder (5) und mit einem zweiten Kompensationszylinder (6), wobei die Coriolis-Leitung (1) zumindest teilweise innerhalb des ersten Kompensationszylinders (5) angeordnet und mit dem ersten Kompensationszylinder (5) mechanisch verbunden ist, die Schwingungseigenschaften des ersten Kompensationszylinders (5) im wesentlichen denen der Coriolis-Leitung (1) entsprechen, die Coriolis-Leitung (1) und der erste Kompensationszylinder (5) innerhalb des zweiten Kompensationszylinders (6) angeordnet sind und die Coriolis-Leitung (1) mit dem zweiten Kompensationszylinder (6) mechanisch verbunden ist,
**dadurch gekennzeichnet,**
**daß** zwischen dem zweiten Kompensationszylinder (6) und dem ersten Kompensationszylinder (5) an den Enden des ersten Kompensationszylinders (5) mindestens zwei Stellglieder (10, 11) zur Eliminierung von Phasenverschiebungen bei der Schwingung des ersten Kompensationszylinders (5) angeordnet sind.

2. Massendurchflußmeßgerät nach Anspruch 1, **dadurch gekennzeichnet, daß** der erste Kompensationszylinder (5) und die Coriolis-Leitung (1) aus dem gleichen Material bestehen.

3. Massendurchflußmeßgerät nach Anspruch 1 oder 2, **dadurch gekennzeichnet, daß** der Schwingungserzeuger (2) zwischen dem ersten Kompensationszylinder (5) und der Coriolis-Leitung (1) angeordnet ist.

4. Massendurchflußmeßgerät nach Anspruch 1 oder 2, **dadurch gekennzeichnet, daß** der Schwingungserzeuger (2) zwischen dem zweiten Kompensationszylinder (6) und dem ersten Kompensationszylinder (5) angeordnet ist.

5. Massendurchflußmeßgerät nach einem der Ansprüche 1 bis 4, **dadurch gekennzeichnet, daß** die Meßwertaufnehmer (3, 4) zwischen dem ersten Kompensationszylinder (5) und der Coriolis-Leitung (1) angeordnet sind.

6. Massendurchflußmeßgerät nach einem der Ansprüche 1 bis 4, **dadurch gekennzeichnet, daß** die Meßwertaufnehmer (3, 4) zwischen dem zweiten Kompensationszylinder (6) und der Coriolis-Leitung (1) angeordnet sind.

7. Massendurchflußmeßgerät nach einem der Ansprüche 1 bis 6, **dadurch gekennzeichnet, daß** zwischen dem zweiten Kompensationszylinder (6) und dem ersten Kompensationszylinder (5) ein Stellglied (13) zur Eliminierung des mediumsdichteabhängigen Massenunterschieds zwischen dem ersten Kompensationszylinder (5) und der Coriolis-Leitung (1) angeordnet ist.

## Claims

1. Mass flowmeter for flowing media, which operates according to the Coriolis principle, with one at least essentially straight Coriolis line (1) guiding the flowing medium, with at least one oscillation generator (2) acting on the Coriolis line (1), with at least one sensor (3, 4) detecting Coriolis oscillations based on a Coirolis force and/or Coriolis forces, and with a first compensation cylinder (5) and a second compensation cylinder (6) wherein the Coriolis line (1) is located within the first compensation cylinder (5) and is mechanically connected with the first compensation cylinder (5), wherein the oscillation properties of the compensation cylinder (5) essentially correspond to those of the Coriolis line (1), the Coriolis line (1) and the first compensation cylinder (5) are located within the second compensation cylinder (6) and the Coriolis line (1) is mechanically connected with the second compensation cylinder (6),
**characterized in**
**that** at least two correcting elements (10, 11) for eliminating phase shifts during the oscillation of the compensation cylinder (5) are located between the second compensation cylinder (6) and the first compensation cylinder (5).

2. Mass flowmeter according to claim 1, **characterized in that** that the first compensation cylinder (5) and the Coriolis line (1) consist of the same material.

3. Mass flowmeter according to claim 1 or 2, **characterized in that** the oscillation generator (2) is located between the first compensation cylinder (5) and the Coriolis line (1).

4. Mass flowmeter according to claim 1 or 2, **characterized in that** the oscillation generator (2) is located between the second compensation cylinder (6) and the first compensation cylinder (5).

5. Mass flowmeter according to any one of claims 1 to 4, **characterized in that** the sensors (3, 4) are located between the first compensation cylinder (5) and the Coriolis line (1).

6. Mass flowmeter according to any one of claims 1 to 4, **characterized in that** the sensors (3, 4) are located between the second compensation cylinder (6) and the Coriolis line (1).

7. Mass flowmeter according to any one of claims 1 to 6, **characterized in that** a correcting element (13) for eliminating the medium density-dependent mass difference between the first compensation cylinder (5) and the Coriolis line (1) is located between the second compensation cylinder (6) and the first compensation cylinder (5).

## Revendications

1. Appareil de mesure de débit massique de fluides en écoulement travaillant selon le principe de Coriolis et présentant :
un conduit de Coriolis (1) qui conduit le fluide en écoulement et qui est au moins essentiellement rectiligne,
un oscillateur (2) qui agit sur le conduit de Coriolis (1),
au moins un enregistreur (3, 4) de valeurs de mesure qui détecte les forces de Coriolis et/ou des oscillations de Coriolis qui reposent sur les forces de Coriolis,
un premier cylindre de compensation (5) et un deuxième cylindre de compensation (6),
le conduit de Coriolis (1) étant disposé au moins en partie à l'intérieur du premier cylindre de compensation (5) et étant relié mécaniquement au premier cylindre de compensation (5),
les propriétés d'oscillation du premier cylindre de compensation (5) correspondant essentiellement à celles du conduit de Coriolis (1),
le conduit de Coriolis (1) et le premier cylindre de compensation (5) étant disposés à l'intérieur du deuxième cylindre de compensation (6) et le conduit de Coriolis (1) étant relié mécaniquement au deuxième cylindre de compensation (6),
**caractérisé en ce que**
au moins deux organes d'ajustement (10, 11) destinés à éliminer les déphasages des oscillations du premier cylindre de compensation (5) sont disposés aux extrémités du premier cylindre de compensation (5) entre le deuxième cylindre de compensation (6) et le premier cylindre de compensation (5).

2. Appareil de mesure de débit massique selon la revendication 1, **caractérisé en ce que** le premier cylindre de compensation (5) et le conduit de Coriolis (1) sont constitués du même matériau.

3. Appareil de mesure de débit massique selon les revendications 1 ou 2, **caractérisé en ce que** l'oscillateur (2) est disposé entre le premier cylindre de compensation (5) et le conduit de Coriolis (1).

4. Appareil de mesure de débit massique selon les revendications 1 ou 2, **caractérisé en ce que** l'oscillateur (2) est disposé entre le deuxième cylindre de compensation (6) et le premier cylindre de compensation (5).

5. Appareil de mesure de débit massique selon l'une des revendications 1 à 4, **caractérisé en ce que** les enregistreurs (3, 4) de valeurs de mesure sont disposés entre le premier cylindre de compensation (5) et le conduit de Coriolis (1).

6. Appareil de mesure de débit massique selon l'une des revendications 1 à 4, **caractérisé en ce que** les enregistreurs (3, 4) de valeurs de mesure sont disposés entre le deuxième cylindre de compensation (6) et le conduit de Coriolis (1).

7. Appareil de mesure de débit massique selon l'une des revendications 1 à 6, **caractérisé en ce qu'**un organe d'ajustement (13) qui élimine les différences de masse qui dépendent de la densité du fluide entre le premier cylindre de compensation (5) et le conduit de Coriolis (1) est disposé entre le deuxième cylindre de compensation (6) et le premier cylindre de compensation (5).
